# EUROPÄISCHE PATENTANMELDUNG

(11) **EP 4 834 101 A1**
(43) Veröffentlichungstag der Anmeldung: **04.11.2026**
(21) Anmeldenummer: 25173089.1
(22) Anmeldetag: 29.04.2025
(51) Int. Cl.: A01K 27/00

(54) **ROLLLEINE**

(71) Anmelder: dogwalk.systems GmbH, 8800 Thalwil (CH)
(72) Erfinder: Bataillard, Roger, 8903 Birmensdorf (CH)
(74) Vertreter: Prins Intellectual Property AG

(57) **Zusammenfassung**

Es wird eine Rollleine (1) zum Aufrollen und Abrollen einer Leine (2) zum Führen von Tieren beschrieben, mit einer Leinenrolle (6), einem Gehäuse (7), einem Haltegriff (15) und einer Bremseinrichtung, wobei die Leine (2) entgegen der Kraft einer Triebfeder (19) von der im Gehäuse (7) gelagerten Leinenrolle (6) abwickelbar und aufgrund der Kraft der Triebfeder (19) wieder auf die Leinenrolle (6) aufwickelbar ist, wobei die Bremseinrichtung einen mehrteiligen Bremsdruckhebel (3) umfasst, welcher von einer Ruheposition, in der die Leinenrolle (6) frei drehbar ist, in eine Einrastposition gebracht werden kann, in der der Bremsdruckhebel (3) ein Aufrollen und Abrollen der Leine (2) in einer Arretierposition von der Leinenrolle (6) sperrt. Der Bremsdruckhebel (3) umfasst zusätzlich ein Rastmittel (8) zum formschlüssigen Blockieren des Abrollens der Leine (2) in einer Rasterposition, und einen Hebel (10), welcher in einer Bremsposition mit einem an der Leinenrolle (6) befestigten Bremsbacke (11) zusammenwirkt zum reibschlüssigen Bremsen der Leine (2). Zudem umfasst der Bremsdruckhebel (3) eine Rastmittelfeder (4) und eine Hebelfeder (5), wobei das Rastmittel (8) zum Einstellen der Rasterposition mit der Rastmittelfeder (4) zusammenwirkt, wobei die Hebelfeder (5) zum Ein- und Ausrasten des Bremsdruckhebels (3) dient zum Einstellen in der Ruheposition, der Bremsposition, der Rasterposition oder der Arretierposition, derart dass alle vier Positionen, die Arretierposition, die Rasterposition, die Ruheposition und die Bremsposition über ein Bedienungselement (16) am Bremsdruckhebel (3) einstellbar sind.

## Beschreibung

### Technisches Gebiet

Die Erfindung betrifft eine multifunktionale Rollleine zum Aufrollen und Abrollen einer Leine zum Führen von Tieren, die entgegen der Kraft einer Feder von einer in einem Gehäuse gelagerten Leinenrolle abrollbar und aufgrund der Kraft der Feder wieder aufrollbar ist, wobei die Leinenrolle mit einem Bremsmechanismus zusammenwirkt.

### Stand der Technik

Rollleinen erfreuen sich bei Hundehaltenden grosser Beliebtheit. Sie lassen sich mehrere Meter durch Zug ausziehen und rollen beim Näherkommen des Tieres dank einem Federmechanismus automatisch wieder ein.

Auch Rollleinen mit Bremsmechanismen sind bekannt, beispielsweise aus DE29804615U1, DE202009017124U1 oder DE20200917125U1, welche eine Leinenrolle beschreiben, welche entlang ihrem Umfang eine Vielzahl von Vorsprüngen aufweist, gegen die eine Bremstaste in der niedergedrückten Lage anschlägt, so dass ein weiteres Abrollen der Leine von der Leinenrolle verhindert wird. Die Bremstaste kann in der niedergedrückten Lage durch einen Verriegelungshebel arretiert werden.

In DE10343112A1 ist eine Leinenrolle offenbart, welche in einem Gehäuse eine um eine Achse drehbare, in Aufrollrichtung vorgespannte Bremstrommel lagert, welche mit einem Gesperre verbunden ist, das zumindest eine beim Abrollen der Leine selbsttätig ausfahrende, sich nach aussen bewegende Sperrklinke und einen in die Bewegungsbahn der ausgefahrenen Sperrklinke ragenden Klinkenanschlag hat, der mittels einer manuell betätigbaren Taste aus der Bewegungsbahn der ausgefahrenen Sperrklinke zurückbewegbar ist.

EP1972193A1 beschreibt eine Bremseinrichtung für eine Leinenrolle einer mechanisch auf- und abwickelbaren Leine zum Führen von Tieren, wobei die Bremseinrichtung eine Bremstaste umfasst, die von einer Ruheposition, in der die Leinenlrolle frei drehbar ist, in eine Wirkposition gebracht werden kann, in der die Bremstaste ein Abwickeln der Leine von der Leinenrolle sperrt, wobei die Bremstaste über einen Schwenkmechanismus in der Wirkposition der Bremstaste ein Abwickeln der Leine von der Leinenrolle verhindert und ein Aufwickeln auf die Leinenrolle möglich ist.

EP3406136A1 offenbart eine Rollleine zum Aufrollen und Abrollen einer Leine zum Führen eines Tieres, mit einer Leinenrolle, die drehbar an einem Träger gelagert und mittels Rückstellmitteln in eine Aufrollposition rückstellbar ist, in der die Leine auf die Leinenrolle aufgewickelt ist, und mit Blockiermitteln mit einer reibschlüssigen Bremse zum Blockieren eines Abrollens der Leine von der Leinenrolle.

Nachteilig bei den bekannten Rollleinen oder Bremseinrichtungen ist, dass sie entweder ein vollständiges Blockieren oder reibschlüssiges Bremsen der Leine ermöglichen, oder in einer weiteren Variante ein Abrollen der Leine verhindern und gleichzeitig ein Aufrollen der Leine ermöglichen. Es gibt jedoch keine multifunktionale Rollleine, bei welcher auf eine einfache Weise über eine einzige Taste die verschiedenen Funktionen in einer Rollleine erreicht werden können, so dass neben einer vollständigen Arretierung mit einer formschlüssigen Bremse auch eine dynamische reibschlüssige Bremse, sowie ein Aufrollen bei gleichzeitigem Sperren des Abrollens ermöglicht wird. Zudem sind die bekannten Mechanismen kompliziert in ihrer Ausführung und teilweise bei der Nutzung für die Gesundheit sowohl für des Tiers wie des Menschen nicht optimal.

### Aufgabe der Erfindung

Der vorliegenden Erfindung liegt nun die Aufgabe zugrunde, eine Rollleine mit einer Bremseinrichtung zu schaffen, mit welcher verschiedene Funktionen auf einfache Weise einstellbar sind zum Bremsen, Arretieren und für den selektiven Rücklauf, sowie welche einfach bedienbar ist und für den Menschen wie auch für das Tier zur Erhaltung der Gesundheit beiträgt.

### Beschreibung der Erfindung

Diese Aufgabe wird durch eine Rollleine zum Aufrollen und Abrollen einer Leine zum Führen von Tieren, mit einer Leinenrolle, einem Gehäuse, einem Haltegriff und einer Bremseinrichtung gelöst, wobei die Leine entgegen der Kraft einer Triebfeder von der im Gehäuse gelagerten Leinenrolle abwickelbar und aufgrund der Kraft der Triebfeder wieder auf die Leinenrolle aufwickelbar ist. Die Bremseinrichtung umfasst einen mehrteiligen Bremsdruckhebel, welcher von einer Ruheposition, in der die Leinenrolle frei drehbar ist, in eine Einrastposition gebracht werden kann, in der der Bremsdruckhebel ein Aufrollen und Abrollen der Leine von der Leinenrolle sperrt, und die Rollleine in einer Arretierposition ist, wobei der Bremsdruckhebel ein Rastmittel umfasst, welches mit Vorsprüngen im Bereich des Aussenumfangs der Leinenrolle zusammenwirkt zum formschlüssigen Blockieren des Abrollens der Leine in einer Rasterposition. Das Rastmittel ist derart ausgebildet ist, dass es beim Aufrollen der Leine über die Vorsprünge der Leinenrolle hinweggleitet und ein Aufrollen der Leine ermöglicht, und ein Abrollen der Leine verhindert. Der Bremsdruckhebel umfasst einen Hebel umfasst einen Hebel, welcher in einer Bremsposition mit einem an der Leinenrolle befestigten Bremsbacke zusammenwirkt zum reibschlüssigen Bremsen der Leine. Zudem umfasst der Bremsdruckhebel eine Rastmittelfeder und eine Hebelfeder, wobei das Rastmittel zum Einstellen der Rasterposition mit der Rastmittelfeder zusammenwirkt, wobei die Hebelfeder zum Ein- und Ausrasten des Bremsdruckhebels dient zum Einstellen in der Ruheposition, der Bremsposition, der Rasterposition oder der Arretierposition, derart dass alle vier Positionen, die Arretierposition, die Rasterposition, die Ruheposition und die Bremsposition über ein Bedienungselement am Bremsdruckhebel einstellbar sind.

Ein Vorteil der erfindungsgemässen Rollleine liegt darin, dass mit einem einzigen mehrteiligen, multifunktionalen Bremsdruckhebel vier verschiedene Positionen der Rollleine eingestellt werden können. So kann aus der Ruheposition die Rasterposition, die Bremsposition oder die Arretierposition über eine einzige Taste, das sogenannte Bedienungselement, am Bremsdruckhebel eingestellt werden. Vorzugsweise wird der Bremsdruckhebel mit dem Daumen bedient und die verschiedenen Positionen sind mit einem einzigen Finger einstellbar. Dieser vereinfachte Mechanismus unterscheidet sich wesentlich von den bekannten Rollleinen, bei welchen verschiedene Positionen über verschiedene Tasten eingestellt werden und somit komplizierter sind.

Die Bremseinrichtung zum Einstellen der verschiedenen Positionen umfasst den mehrteiligen Bremsdruckhebel. Der mehrteilige Bremsdruckhebel ist vorzugsweise dem Haltegriff benachbart angeordnet. Vorzugsweise weist der mehrteilige Bremsdruckhebel ein Oberteil und ein Unterteil auf. Das Oberteil umfasst vorzugsweise das Rastmittel, die Rastmittelfeder, das Gleitelement, das Bedienungselement und die Hebelfeder, und das Unterteil umfasst vorzugsweise ein Bremshebelelement mit dem Hebel für die reibschlüssige Bremsposition, ein Stahlstift und eine Kulisse. Das Bedienungselement ist vorzugsweise am der Leinenrolle entgegengesetzten Ende des Bremsdruckhebels angeordnet und verschliesst das Oberteil und das Unterteil. Die Kulisse des Bremshebelelements im Unterteil des Bremsdruckhebels dient zum Einstellen und Lösen der verschiedenen Positionen, wobei der Bremsdruckhebel selber jeweils entweder in der Ausrastposition oder in der Einrastposition ist. Das Bremshebelelement umfasst einen Stahlstift und eine Kulisse, wobei der Stahlstift in der Kulisse läuft zum Fixieren in der Einrastposition oder zum Lösen in die Ausrastposition des Bremsdruckhebels. Das Einstellen der verschiedenen Positionen des Bremsdruckhebels funktioniert nach dem Kugelschreiber-Prinzip. Einmaliges Drücken lässt den Mechanismus, d.h. den Stahlstift, in der Kulisse einrasten, und der Bremsdruckhebel befindet sich in der Einrastposition. Erneutes Drücken löst die Arretierung, und durch den Federmechanismus gleitet der Stahlstift über eine weitere Vertiefung der Kulisse zurück in die Ausgangsposition, was beim Bremsdruckhebel die Ausrastposition ist.

Zum Bedienen des Bremsdruckhebels und zum Einstellen der verschiedenen Positionen des Bremsdruckhebels und der Rollleine ist der Bremsdruckhebel bis zu einem Anschlag in Richtung der Leinenrolle vorzugsweise linear verschiebbar, wodurch er in die Einrastposition einrasten kann. Zudem ist der Bremsdruckhebel vorzugsweise mit dem Gehäuse über ein Gelenk schwenkbar verbunden. Das Gelenk ist vorzugsweise Teil des Bremshebelelements und weist vorzugsweise die Form eines Zylinders auf. Vorzugsweise interagiert das zylindrische Gelenk mit einem Hohlzylinder in der Gehäusewand. Der Bremsdruckhebel ist also vorzugsweise linear verschiebbar ist, was ausgehend vom Bedienungselement in einer Vor- und Zurückbewegung resultiert, und gleichzeitig ist der Bremsdruckhebel schwenkbar, was ausgehend vom Bedienungselement die Bewegungsrichtung vom Haltegriff weg oder zum Haltegriff hin bedeutet.

Ohne Bedienen des Bedienungselements am Bremsdruckhebel befindet sich der Bremsdruckhebel in der Ausrastposition und die Rollleine in der Ruheposition, so dass die Leine frei abrollbar und aufrollbar ist. Die Begriffe abrollbar und abwickelbar beziehungsweise aufrollbar und aufwickelbar werden synonym verwendet. Zum Einstellen der Bremsposition der Rollleine aus der Ruheposition wird der Bremsdruckhebel durch Drücken, vorzugsweise mit dem Daumen, gegen die Kraft einer Blattfeder, in Richtung Haltegriff verschwenkt und das reibschlüssige Bremsen wird eingestellt. Der Bremsdruckhebel rastet dabei nicht in der Einrastposition ein und wird nicht linear verschoben, sondern bleibt in seiner Ausrastposition. In der Bremsposition wirkt der Hebel des Bremsdruckhebels mit einer am Gehäuse befestigten Bremsbacke zusammen, wodurch die Bremsbacke mit den Bremsbelägen an eine Bremstrommel gepresst werden kann, welche sich vorzugsweise seitlich an der Leinenrolle befindet und Teil der Leinenrolle ist. Dadurch kann das Auf- und Abrollen der Rollleine dynamisch kontrolliert werden. Das reibschlüssige Bremssystem für das langsame Abbremsen basiert vorzugsweise auf einer Felgenbremse aus Bremsbacke und Bremsbelägen. Für das reibschlüssige Bremsen, auch kraftschlüssiges Bremsen genannt, wird die Bremsbacke mit den Bremsbelägen für die Verlangsamung auf die Bremstrommel gedrückt, die sich auf der Leinenrolle befindet. Die Bremsbeläge bestehen vorzugsweise aus Echtleder, die Bremstrommel vorzugsweise aus mit Karbon verstärktem Kunststoff. Durch Loslassen des Bremsdruckhebels in der Bremsposition wird die reibschlüssige Bremse wieder gelöst und der Bremsdruckhebel geht in die Ruheposition zurück.

Im Gegensatz zu vielen herkömmlichen Rollleinen, lässt sich die erfindungsgemässe Rollleine also nicht nur abrupt stoppen, sondern durch das reibschlüssige Bremsen auch weich abbremsen, was sowohl für Hund als auch Hundeführer angenehmer, ungefährlicher und gesünder ist. In einer weiteren Ausführungsform ist das Ende der Leine, welches an der Leinenrolle befestigt ist, elastisch. Das elastische Ende ist flexibel und kann beispielsweise ein Elastomer sein, vorzugsweise aus Silikon, Gummi oder elastischem Polyurethan. Dies verhindert, dass wenn die Leine vollständig ausgezogen wird, der Hund mit voller Geschwindigkeit in den Anschlag läuft, wodurch normalerweise extreme Kräfte entstehen, die sowohl auf die Gelenke des Hundes als auch auf die seines Halters wirken. Die ruckfreie Verlangsamung, durch das reibschlüssige Bremsen und das elastische Ende der Leine, hat bei Mensch und Tier einen gesundheitlichen Effekt, indem es die Gelenke schont.

In der Rasterposition ist das Abrollen der Leine verhindert, während ein Aufrollen ermöglicht wird. Zum Einstellen der Rasterposition wird der Bremsdruckhebel ausgehend von der Ruheposition linear Richtung Leinenrolle verschoben, bzw. zur Leinenrolle eingedrückt. Dadurch verschieben sich das Bedienungselement und das Gleitelement des Bremsdruckhebels, welche fest verbunden sind, zusammen mit dem Rastmittel und der Rastmittelfeder in Richtung der Leinenrolle, so dass sich der Bremsdruckhebel in der Einrastposition befindet. Das Rastmittel des Bremsdruckhebels wirkt mit Vorsprüngen, welche im Bereich des Aussenumfangs der Leinenrolle angeordnet sind, zusammen, und rastet ein. Die Leinenrolle weist entlang ihrem Umfang eine Vielzahl von Vorsprüngen auf, die bei gedrücktem Bremsdruckhebel mit dessen Rastmittel zusammenwirken, um die Leinenrolle in Abwickelrichtung zu sperren. Im Einzelnen können die Vorsprünge sägezahnförmig ausgebildet sein, und eine radiale Kante aufweisen, in welche das Rastmittel einhaken kann. Damit wird eine sichere Anlage des Rastmittels an dem Vorsprung bewirkt. Das Rastmittel weist vorzugsweise einen Haken auf, welcher in den Vorsprüngen einhaken kann und das Abwickeln sperrt. Zum Aufwickeln gleitet das Rastmittel entlang der Rückseite der Vorsprünge und ermöglicht ein Aufrollen. Beim Aufrollen kann der Haken vom Vorsprung weggedrückt werden, da das Rastmittel im Gleitelement gelagert ist. Durch die Rastmittelfeder wird das Rastmittel wieder in Richtung der Leinenrolle gedrückt, damit es beim nächsten Vorsprung einhaken kann.

In der Arretierposition ist das Aufrollen und Abrollen der Leine von der Leinenrolle gesperrt und die Leine ist in beide Richtungen blockiert. Zum Einstellen der Arretierposition ist der Bremsdruckhebel aus der Ruheposition in Richtung Haltegriff verschwenkt und in Richtung der Leinenrolle verschoben, der Stahlstift rastet in der Kulisse ein, und der Bresmdruckhebel befindet sich in der Einrastposition. Durch Drücken des Bedienungselements in Richtung des Haltegriffs wird die Bremsbacke mit Bremsbelag durch den Hebel an die Bremstrommel gedrückt. Dadurch wird das Aufrollen der Leine trotz der Kraft der Triebfeder verhindert. Gleichzeitig befindet sich der Bremsdruckhebel in der Einrastposition, wodurch der Haken am Rastmittel am Vorsprung anliegt und das weitere Abrollen der Leine blockiert.

Zum Einstellen der Arretierposition und/oder der Rasterposition wird der Bremsdruckhebel in Richtung Leinenrolle in die Einrastposition gedrückt, der Stahlstift läuft durch die Kulisse und ist in Eindrückrichtung der Leinenrolle in der Einrastposition fixierbar. Zum Lösen der Arretierposition oder der Rasterposition ist der Bremsdruckhebel durch erneutes Drücken durch die Hebelfeder wieder lösbar, und der Stahlstift springt durch die Kulisse wieder zurück in die Ruheposition. Es ist möglich, die Leine an jeder Position zu arretieren und durch nochmaliges Drücken des Bremsdruckhebels wieder zu lösen. Dieses Prinzip wird auch Kugelschreiber-Prinzip genannt.

Weitere Vorteile der Erfindung folgen aus der nachfolgenden Beschreibung, in der die Erfindung anhand von in den schematischen Zeichnungen dargestellten Ausführungsbeispielen näher erläutert wird.

### Kurze Beschreibung der Figuren

Es zeigen:
Fig. 1a eine perspektivische Ansicht von schräg oben auf eine Rollleine,
Fig. 1b eine Explosionszeichnung einer Leinenrolle mit dem Rollenkörper,
Fig. 2 eine Explosionszeichnung der Rollleine mit Teilansicht innen,
Fig. 3 eine Explosionszeichnung des Bremsdruckhebels,
Fig. 4a eine perspektivische Ansicht auf das Bedienungselement des Bremsdruckhebels in der Ausrastposition,
Fig. 4b ein Längsschnitt entlang der Linie A-A des Bremsdruckhebels von Fig. 4a,
Fig. 4c zeigt eine perspektivische Darstellung von schräg oben auf den Bremsdruckhebel von Fig. 4a,
Fig. 4d zeigt eine perspektivische Darstellung von schräg oben auf das Bremshebelelement von Fig. 4a,
Fig. 5a eine perspektivische Ansicht auf das Bedienungselement des Bremsdruckhebels in der Einrastposition,
Fig. 54b ein Längsschnitt entlang der Linie A-A des Bremsdruckhebels von Fig. 5a,

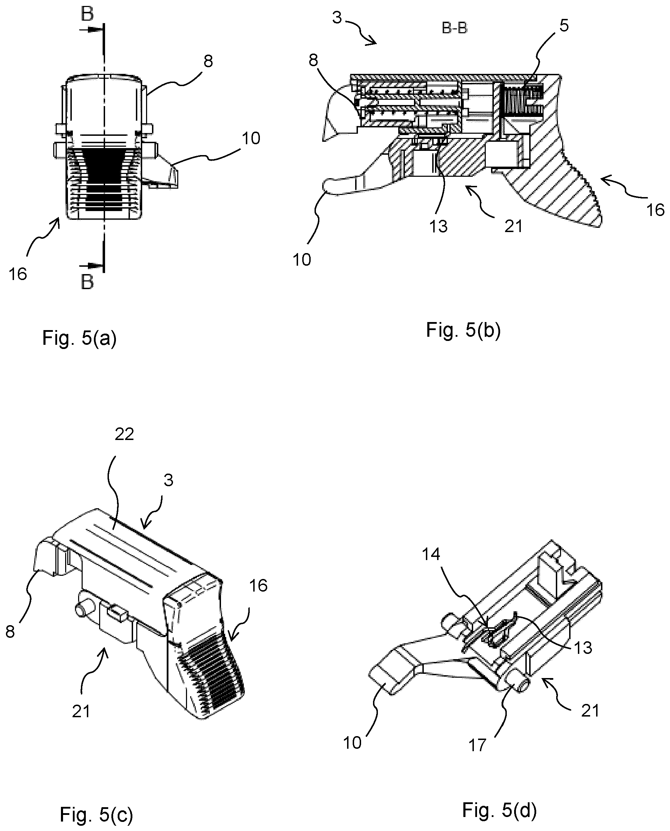

Fig. 5c zeigt eine perspektivische Darstellung von schräg oben auf den Bremsdruckhebel von Fig. 5a,
Fig. 5d zeigt eine perspektivische Darstellung von schräg oben auf das Bremshebelelement von Fig. 5a,

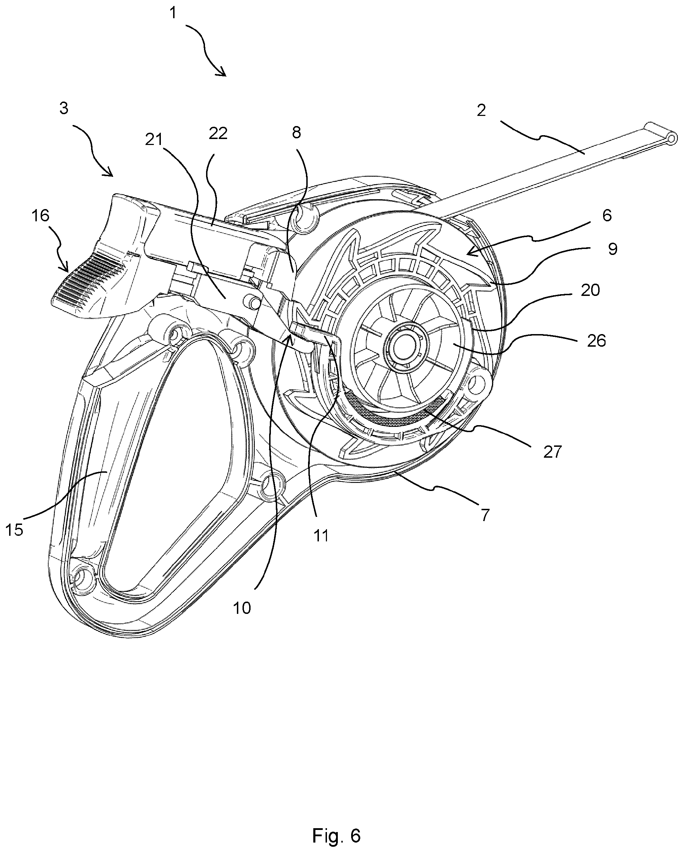

Fig. 6 eine Teilschnittansicht durch die Rollleine in der Ruheposition,

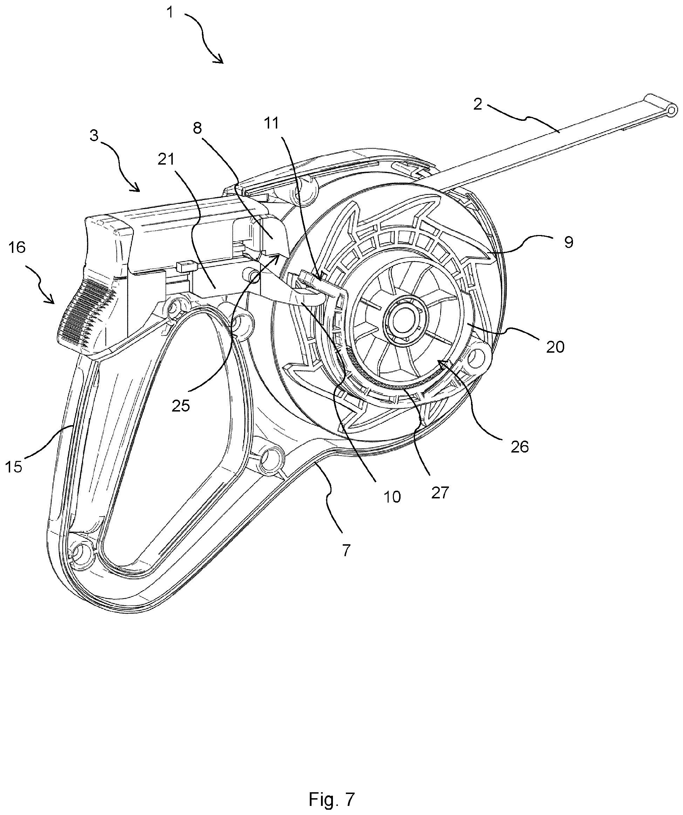

Fig. 7 eine Teilschnittansicht durch die Rollleine in der Bremsposition,

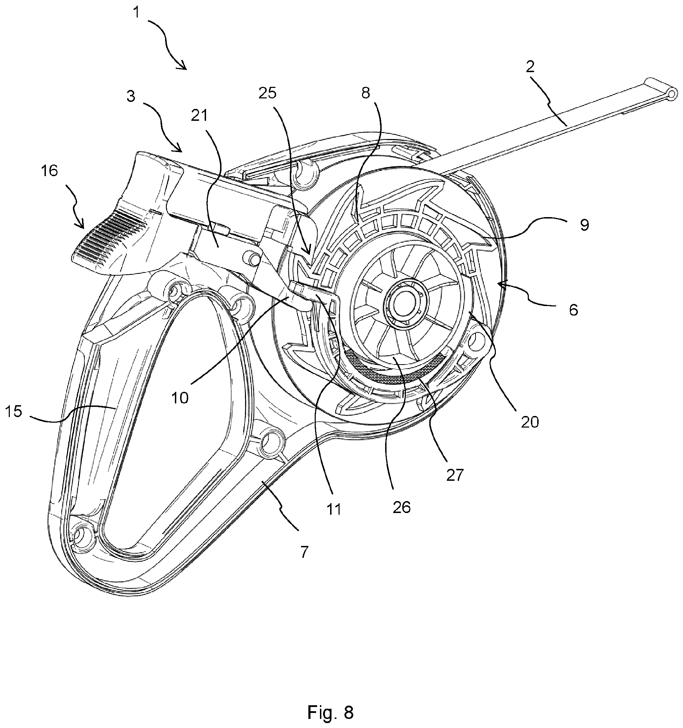

Fig. 8 eine Teilschnittansicht durch die Rollleine in der Rasterposition beim Abrollen der Leine,

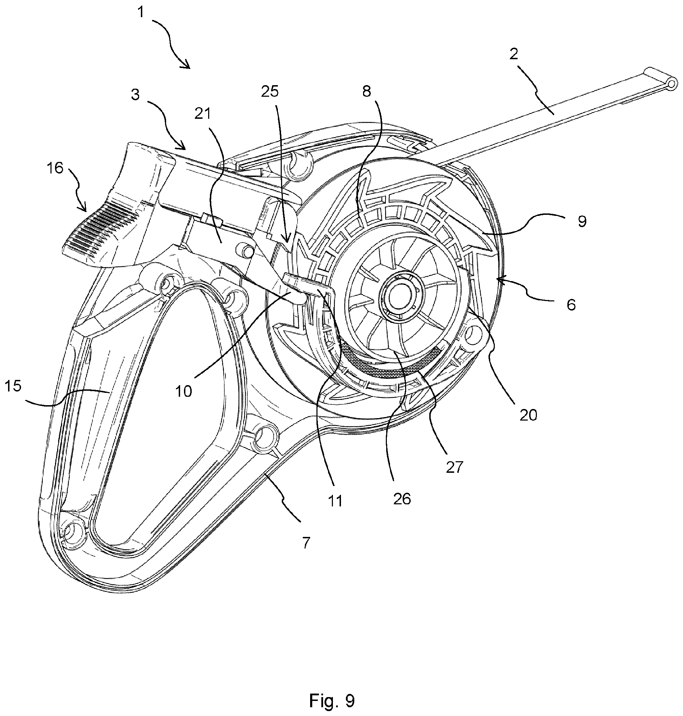

Fig. 9 eine weitere Teilschnittansicht durch die Rollleine in der Rasterposition beim Aufrollen der Leine, und

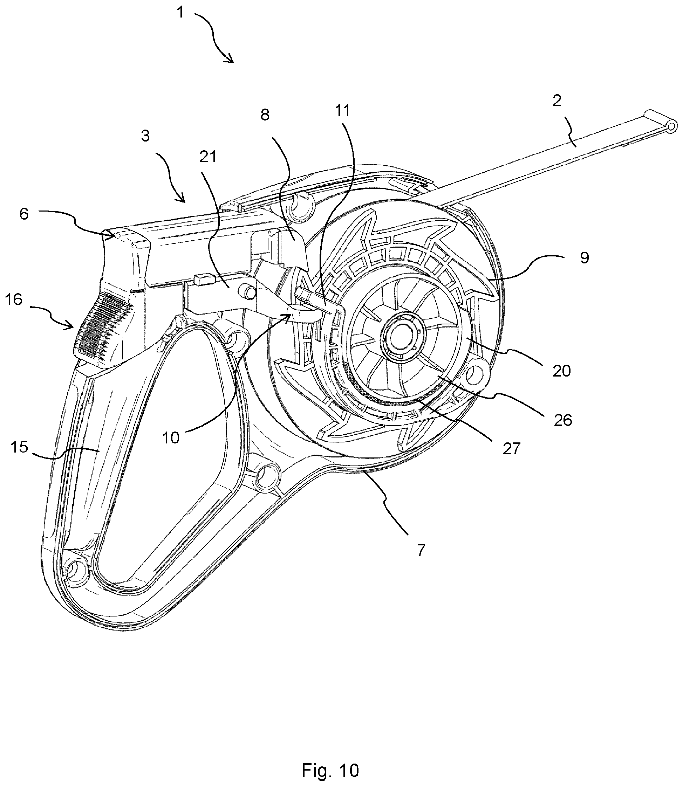

Fig. 10 eine Teilschnittansicht durch die Rollleine in der Arretierposition.

In den Figuren sind für dieselben Elemente jeweils dieselben Bezugszeichen verwendet und es gelten Erklärungen zu einem bestimmten Bezugszeichen für alle Figuren, wenn nicht ausdrücklich etwas anders erwähnt ist.

### Ausführungsbeispiele der Erfindung

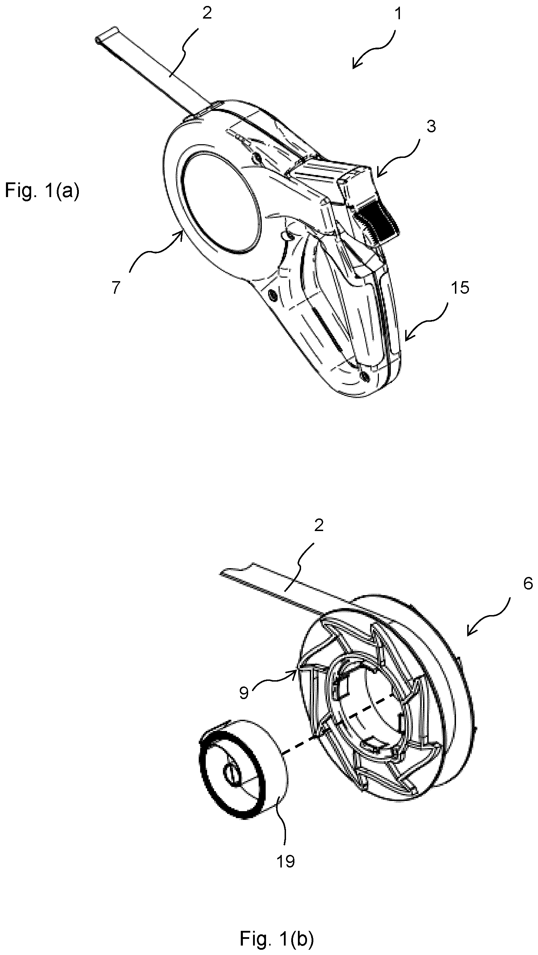

Figur 1a zeigt eine Rollleine 1 in einer perspektivischen Ansicht, mit einem Gehäuse 7, einer im Gehäuse drehbar gelagerter Leinenrolle (6, nicht dargestellt, in Fig. 1b sichtbar), einer Leine 2 und dem Bremsdruckhebel 3. Der der Bremsdruckhebel 3 ist dem Haltegriff 15 benachbart angeordnet und sowohl linear in Richtung des Gehäuses 7, bzw der Leinenrolle, verschiebbar und in Richtung Haltegriff verschwenkbar.

Figur 1b zeigt eine Leinenrolle 6, welche im Gehäuse 7, wie in Fig. 1a beschrieben, drehbar gelagert ist. Die Leinenrolle 6 umfasst im Bereich des Aussenumfangs Vorsprünge 9, welche mit einem Rastmittel (nicht dargestellt) des Bremsdruckhebels (nicht dargestellt) zusammenwirken zum formschlüssigen Blockieren des Abrollens der Leine 2. Die Leinenrolle 6 weist eine Triebfeder 19 auf, gegen deren Kraft die Leinenrolle 6 in Abrollrichtung zum Abrollen der Leine 2 und aufgrund dieser Federkraft in Aufrollrichtung zum Aufrollen der Leine drehbar ist.

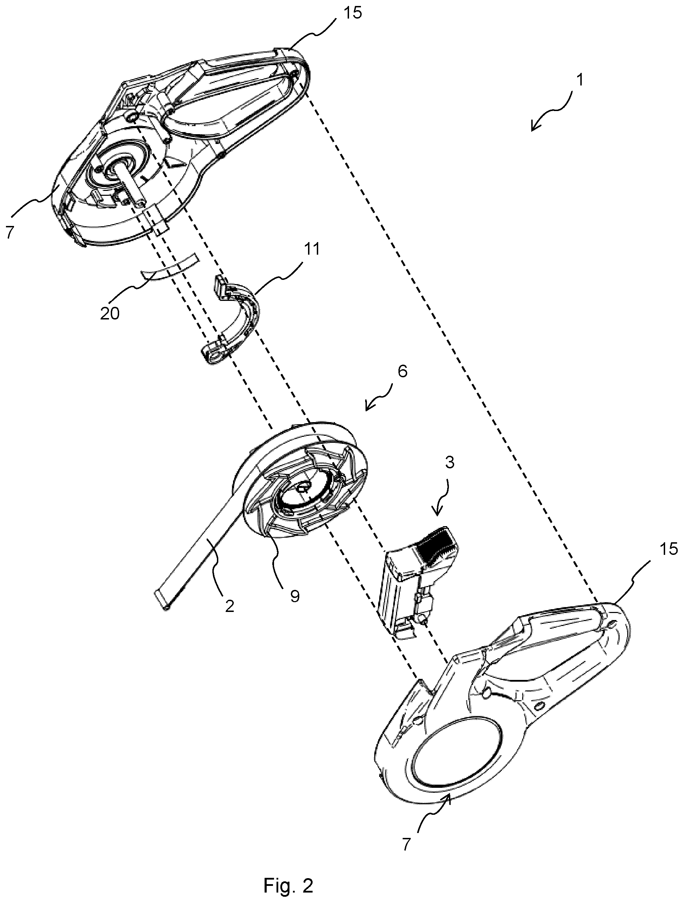

In Figur 2 ist eine Explosionszeichnung einer Rollleine 2 dargestellt, wie in Fig. 1a und 1b beschrieben, mit einem zweiteiligen Gehäuse 7, welches beidseits der Leinenrolle 6 angeordnet ist, einer im Gehäuse drehbar gelagerten Leinenrolle 6 mit Vosprüngen 9, einer Leine 2 und dem Bremsdruckhebel 3. Zudem ist die Bremsbacke 11 sichtbar, welche an zwischen einem Gehäuseteil 7 und der Leinenrolle 6 angebracht ist, und welche über eine Blattfeder 20 mit Bremsbelägen (nicht dargestellt), an einer Bremstrommel (nicht dargestellt) im inneren der Leinenrolle 6 zusammenwirken zum reibschlüssigen Bremsen. Die Blattfeder 20 ist in der Bremsbacke 11 positioniert und mit dem Gehäuse 7 verbunden. Die Blattfeder 20 drückt die Bremsbacke 11 von der Leinenrolle (nicht dargestellt) weg, was das Bremsen beim Loslassen des Bedienungselements (nicht dargestellt) löst. Die Kraft der Blattfeder 20 wirkt durch die Umlenkung von Bremsbacke 11 auf den Hebel 10, dass der Bremsdruckhebel 3 wieder nach oben in die Ruheposition geht.

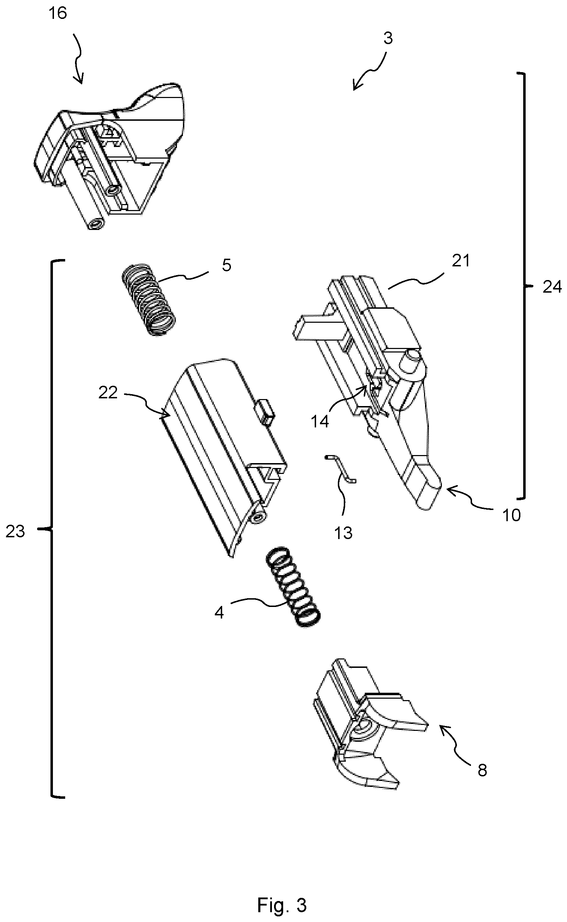

Figur 3 zeigt eine Explosionsdarstellung eines Bremsdruckhebels 3, welcher ein Oberteil 23 und ein Unterteil 24 aufweist. Das Oberteil 23 umfasst das Rastmittel 8, die Rastmittelfeder 4 und die Hebelfeder 5, und das Unterteil 24 umfasst ein Bremshebelelement 21 mit dem Hebel 10 für die reibschlüssige Bremsposition. Ebenfalls im Bremshebelelement 21 ist die Kulisse 14 angeordnet, in welcher der Stahlstift 13 entlanggleitet zum Einstellen der verschiedenen Positionen. Am der Leinenrolle (nicht dargestellt) entgegengesetzten Ende des Bremsdruckhebels 3 ist ein Bedienungselement 16 angeordnet. Es verschliesst das Oberteil 23 und das Unterteil 24. Das Bedienungselement 16 ist mit einem Finger, vorzugsweise mit dem Daumen, bedienbar und darüber sind alle Positionen einstellbar. Die Hebelfeder 5 ist direkt mit dem Bedienungselement 16 verbunden. Angrenzend an die Hebelfeder 5 ist die Rastmittelfeder 4 angeordnet, welche ihrerseits mit dem Rastmittel 8 verbunden ist. Ein Gleitelement 22 verbindet das Rastmittel 8 mit dem Bedienungselement 16 und deckt die Hebelfeder 5 und die Rastmittelfeder 4 ab. Das Gleitelement 22 kann beim Eindrücken des Bremsdruckhebels 3 in Richtung Leinenrolle (nicht dargestellt) entlang des Bremshebelelements 21 gleiten.

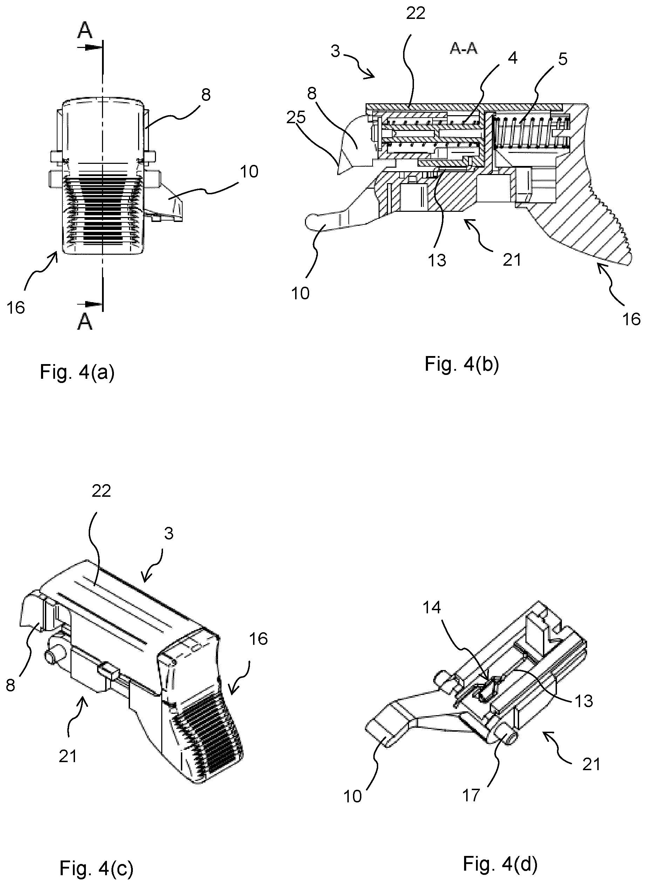

Figur 4a zeigt eine perspektivische Darstellung des Bremsdruckhebels 3 mit Sicht auf das Bedienungselement 16, wenn sich der Bremsdruckhebel in der Ausrastposition (siehe Fig. 6) befindet. In dieser Perspektive sind ebenfalls der Hebel 10 und das Rastmittel 8 sichtbar.

Figur 4b zeigt eine Teilschnittansicht mit einem Schnitt durch den Bremsdruckhebel 3 entlang der Linie A-A aus Fig. 4a mit dem Bedienungselement 16, dem Bremshebelelement 21 mit dem Hebel 10, dem Gleitelement 22 und dem Rastmittel 8. Ebenfalls sichtbar ist die Hebelfeder 5, welche mit der Rastmittelfeder 4 (im Schnitt dargestellt) interagiert, sowie der Stahlstift 13. Durch einmaliges Drücken des Bedienungselements 16 in Richtung der Leinenrolle (nicht dargestellt) gegen die Kraft der Hebelfeder 5 rastet der Bremsdruckhebel 3 aus und bleibt in seiner Ausrastposition. Der Stahlstift 13 gleitet durch die Kulisse 14 (in Fig. 4d dargestellt) im Bremshebelelement 21 und bleibt in der Ausrastposition. Das Bedienungselement 16 und das Gleitelement 22 sind fest verbunden und verschieben sich zusammen mit dem Rastmittel 8 und der Rastmittelfeder 4 von der Leinenrolle (in Fig. 6 dargestellt) weg in die Ausrastposition. In dieser Position kann der Haken 25 am Rastmittel 8 keinen Kontakt mit den Vorsprüngen 9 an der Leinenrolle 6 herstellen.

Figur 4c zeigt eine perspektivische Darstellung des Bremsdruckhebels 3 mit Sicht von schräg oben auf das Gleitelement 22 und das Bedienungselement 16, wenn sich der Bremsdruckhebel 3 in der Ausrastposition befindet. In dieser Perspektive sind ebenfalls Bremshebelelement 21 und das Rastmittel 8 sichtbar.

Figur 4d zeigt eine perspektivische Darstellung von schräg oben auf das Bremshebelelement 21 von Fig. 4a und zeigt die Position des Stahlstifts 13 in der Kulisse 14 an dem des Hebels 10 entgegengesetzten Ende der Kulisse 14 im Bremshebelelement 21, wenn sich der Bremsdruckhebel 3 in der Ausrastposition befindet. Das Bremshebelelement 21 weist zusätzlich ein Gelenk 17 in Form eines Zylinders auf, welches in einen Hohlzylinder im Gehäuse (nicht dargestellt) einführbar ist und damit schwenkbar verbunden ist.

Figur 5a zeigt eine perspektivische Darstellung des Bremsdruckhebels 3 mit Sicht auf das Bedienungselement 16, wenn sich der Bremsdruckhebel in der Einrastposition befindet. In dieser Perspektive sind ebenfalls der Hebel 10 und das Rastmittel 8 sichtbar.

Figur 5b zeigt eine Teilschnittansicht mit einem Schnitt durch den Bremsdruckhebel 3 entlang der Linie A-A aus Fig. 5a mit dem Bedienungselement 16, dem Bremshebelelement 21 mit dem Hebel 10, dem Gleitelement 22 und dem Rastmittel 8. Ebenfalls sichtbar ist die Hebelfeder 5, welche mit der Rastmittelfeder 4 (im Schnitt dargestellt) interagiert, sowie der Stahlstift 13. Durch einmaliges Drücken des Bedienungselements 16 in Richtung der Leinenrolle (nicht dargestellt) und in Richtung des Hebels 10 gegen die Kraft der Hebelfeder 5 rastet der Bremsdruckhebel 3 ein (siehe Figur 8) und bleibt in der Einrastposition. Der Stahlstift 13 gleitet durch die Kulisse 14 (in Fig. 5d dargestellt) im Bremshebelelement 21 und bleibt in der Einrastposition. Das Bedienungselement 16 und das Gleitelement 22 sind fest verbunden und verschieben sich zusammen mit dem Rastmittel 8 und der Rastmittelfeder 4 in Richtung der Leinenrolle (in Fig. 8 dargestellt). Die Hebelfeder 5 wird dabei zusammengedrückt. In der Einrastposition kann der Haken 25 am Rastmittel 8 Kontakt mit den Vorsprüngen 9 an der Leinenrolle 6 herstellen.

Figur 5c zeigt eine perspektivische Darstellung des Bremsdruckhebels 3 mit Sicht von schräg oben auf das Gleitelement 22 und das Bedienungselement 16, wenn sich der Bremsdruckhebel 3 in der Einrastposition befindet. In dieser Perspektive sind ebenfalls Bremshebelelement 21 und das Rastmittel 8 sichtbar.

Figur 5d zeigt eine perspektivische Darstellung von schräg oben auf das Bremshebelelement 21 von Fig. 5a und zeigt die Position des Stahlstifts 13 in der Kulisse 14 an dem des Hebels 10 entgegengesetzten Ende der Kulisse 14 im Bremshebelelement 21, wenn sich der Bremsdruckhebel 3 in der Einrastposition befindet. Das Bremshebelelement 21 weist zusätzlich ein Gelenk 17 in Form eines Zylinders auf, welches in einen Hohlzylinder im Gehäuse (nicht dargestellt) einführbar ist und damit schwenkbar verbunden ist.

Der Stahlstift 13 gleitet also beim Eindrücken des Bremsdruckhebels in Richtung Leinenrolle (nicht dargestellt), entlang der einen Vertiefung der Kulisse 14 in die Einrastposition. Beim erneuten Drücken löst sich der Stahlstift 13 aus der Einrastposition und gleitet entlang einer anderen Vertiefung der Kulisse 14 zurück in die Ausrastposition, welche in Richtung Bedienungselement 16 angeordnet ist.

In Figur 6 ist eine Teilschnittansicht durch eine Rollleine 1 mit dem Bremsdruckhebel 3 in Ausrastposition dargestellt, mit einem Gehäuse 7, einer im Gehäuse drehbar gelagerter Leinenrolle 6, einer Leine 2 und dem Bremsdruckhebel 3. Der der Bremsdruckhebel 3 (in Figur 3 beschrieben) ist dem Haltegriff 15 benachbart angeordnet und befindet sich in Ruheposition. Das bedeutet, dass die Leinenrolle 6 frei drehbar ist, und weder das Rastmittel 8 in die Vorsprünge 9 der Leinenrolle 6 noch der Hebel 10 des Bremshebelelements 21 mit der Bremsbacke 11 interagiert. Die Bremsbacke 11) mit Bremsbelag 27 wird durch die Blattfeder 20 von der Bremstrommel 26 weggedrückt, wodurch das freie Auf- und Abrollen der Leine 2 ermöglicht wird. Die Leine 2 kann entweder durch Zug von der Leinenrolle 6 abgerollt werden (die Leinenrolle 6 dreht sich aus dieser Perspektive beim Abrollen im Uhrzeigersinn) oder durch die Triebfeder (nicht dargestellt) wieder aufgerollt werden (die Leinenrolle 6 dreht sich aus dieser Perspektive beim Aufrollen gegen den Uhrzeigersinn).

Figur 7 zeigt eine Teilschnittansicht durch die Rollleine 1 in der Bremsposition, wobei sich der Bremsdruckhebel 3 in der Ausrastposition (siehe Figur 4) befindet. Die Leine 2 kann frei auf- und abgerollt werden. Durch gezieltes Drücken des Bedienungselements 16 in Richtung des Haltegriffs 15 gegen die Kraft der Blattfeder 20 wird die Bremsbacke 11 mit Bremsbelag 27 durch den Hebel 10 an die Bremstrommel 26 gedrückt, wodurch das Auf- und Abrollen der Leine 2 dynamisch kontrolliert wird. Das reibschlüssige Bremssystem für das langsame Abbremsen basiert auf einer Felgenbremse aus Bremsbacke und Bremsbelägen, die für die Verlangsamung auf die Bremstrommel drückt, die sich auf der Leinenrolle befindet. Durch Loslassen des Bremsdruckhebels 3 in der Bremsposition wird die reibschlüssige Bremse wieder gelöst und der Bremsdruckhebel 3 geht in die Ruheposition zurück.

Figur 8 zeigt eine Teilschnittansicht durch die Rollleine 1 in der Rasterposition, wobei sich der Bremsdruckhebel 3 in der Einrastposition (siehe Figur 5) befindet. In der Rasterposition ist das Abrollen der Leine 2 verhindert, während ein Aufrollen ermöglicht wird. In Figur 8 ist dargestellt, wie das Abrollen der Leine blockiert wird. Zum Einstellen der Rasterposition wird ausgehend von der Ruheposition der Bremsdruckhebel linear Richtung Leinenrolle 6 verschoben, bzw. zur Leinenrolle 6 eingedrückt. Dadurch verschiebt sich das Rastmittel 8 des Bremsdruckhebels 3 in Richtung Leinenrolle 6 und wirkt mit Vorsprüngen 9, welche im Bereich des Aussenumfangs der Leinenrolle 6 angeordnet sind, zusammen, und rastet ein. Der Haken (25) am Rastmittel (8) steht am Vorsprung (9) an und verhindert das weitere Abrollen der Leine (2). Die Vorsprünge 9 sind sägezahnförmig ausgebildet und weisen eine radiale Kante aufweisen, in welche das Rastmittel einhaken kann. Damit wird eine sichere Anlage des Rastmittels an dem Vorsprung bewirkt. Das Rastmittel 8 weist einen Haken 25 auf, welcher in den Vorsprüngen 9 einhaken kann und das Abrollen sperrt.

Figur 9 zeigt eine weitere Teilschnittansicht durch die Rollleine 1 in der Rasterposition und stellt im Gegensatz zu Figur 8 dar, wie das Aufrollen ermöglicht ist. Zum Aufrollen gleitet das Rastmittel 8 entlang der Rückseite der Vorsprünge 9 und ermöglicht ein Aufrollen. Durch die Kraft der Triebfeder (nicht dargestellt) wird die Leine 2 aufgerollt. Der Haken 25 am Rastmittel 8 rutscht über den Vorsprung 9 und wird entgegen der Kraft der Rastmittelfeder (in Fig. 5 dargestellt) in Richtung des Bremsdruckhebels 3 gedrückt.

In Figur 10 ist eine Teilschnittansicht durch die Rollleine 1 in der Arretierposition dargestellt, wobei sich der Bremsdruckhebel 3 in der Einrastposition (siehe Figur 5) befindet. In der Arretierposition ist das Aufrollen und Abrollen der Leine 2 von der Leinenrolle 6 gesperrt und die Leine 2 ist in beide Richtungen blockiert. Zum Einstellen der Arretierposition ist der Bremsdruckhebel 3 aus der Ruheposition in Richtung Haltegriff 15 verschwenkt und in Richtung der Leinenrolle 6 verschoben. Durch Drücken des Bedienungselements 16 in Richtung des Haltegriffs 15 wird die Bremsbacke 11 mit Bremsbelag 27 durch den Hebel 10 an die Bremstrommel 26 gedrückt. Dadurch wird das Aufrollen der Leine 2 trotz der Kraft der Triebfeder (nicht dargestellt) verhindert. Gleichzeitig befindet sich der Bremsdruckhebel 3 in der Einrastposition (in Fig. 5 dargestellt), wodurch der Haken 25 am Rastmittel 8 am Vorsprung 9 anliegt und das weitere Abrollen der Leine 2 blockiert.

### Bezugszeichenliste

- 1: Rollleine
- 2: Leine
- 3: Bremsdruckhebel
- 4: Rastmittelfeder
- 5: Hebelfeder
- 6: Leinenrolle
- 7: Gehäuse
- 8: Rastmittel
- 9: Vorsprung
- 10: Hebel
- 11: Bremsbacke
- 13: Stahlstift
- 14: Kulisse
- 15: Haltegriff
- 16: Bedienungselement
- 17: Gelenk
- 18: elastisches Band
- 19: Triebfeder
- 20: Blattfeder
- 21: Bremshebelelement
- 22: Gleitelement
- 23: Oberteil
- 24: Unterteil
- 25: Haken
- 26: Bremstrommel
- 27: Bremsbelag

## Patentansprüche

1. Rollleine (1) zum Aufrollen und Abrollen einer Leine (2) zum Führen von Tieren, mit einer Leinenrolle (6), einem Gehäuse (7), einem Haltegriff (15) und einer Bremseinrichtung, wobei die Leine (2) entgegen der Kraft einer Triebfeder (19) von der im Gehäuse (7) gelagerten Leinenrolle (6) abwickelbar und aufgrund der Kraft der Triebfeder (19) wieder auf die Leinenrolle (6) aufwickelbar ist, wobei die Bremseinrichtung einen mehrteiligen Bremsdruckhebel (3) umfasst, welcher von einer Ruheposition, in der die Leinenrolle (6) frei drehbar ist, in eine Einrastposition gebracht werden kann, in der der Bremsdruckhebel (3) ein Aufrollen und Abrollen der Leine (2) von der Leinenrolle (6) in einer Arretierposition sperrt, wobei der Bremsdruckhebel (3) ein Rastmittel (8) umfasst, welches mit Vorsprüngen (9) im Bereich des Aussenumfangs der Leinenrolle (6) zusammenwirkt zum formschlüssigen Blockieren des Abrollens der Leine (2) in einer Rasterposition, wobei das Rastmittel (8) derart ausgebildet ist, dass es beim Aufrollen der Leine (2) über die Vorsprünge (9) der Leinenrolle (6) hinweggleitet und ein Aufrollen der Leine (2) ermöglicht und ein Abrollen der Leine (2) verhindert,
**dadurch gekennzeichnet, dass** der Bremsdruckhebel (3) einen Hebel (10) umfasst, welcher in einer Bremsposition mit einem an der Leinenrolle (6) befestigten Bremsbacke (11) zusammenwirkt zum reibschlüssigen Bremsen der Leine (2), wobei der Bremsdruckhebel (3) eine Rastmittelfeder (4) und eine Hebelfeder (5) umfasst, wobei das Rastmittel (8) zum Einstellen der Rasterposition mit der Rastmittelfeder (4) zusammenwirkt, wobei die Hebelfeder (5) zum Ein- und Ausrasten des Bremsdruckhebels (3) dient zum Einstellen in der Ruheposition, der Bremsposition, der Rasterposition oder der Arretierposition, derart dass alle vier Positionen, die Arretierposition, die Rasterposition, die Ruheposition und die Bremsposition über ein Bedienungselement (16) am Bremsdruckhebel (3) einstellbar sind.

2. Rollleine (1) nach Anspruch 1, **dadurch gekennzeichnet, dass** das Bedienungselement (16) am Bremsdruckhebel (3) mit einem Finger bedienbar ist und somit die Ruheposition, die Rasterposition, die Bremsposition und die Arretierposition mit einem Finger einstellbar sind.

3. Rollleine (1) nach einem der vorhergehenden Ansprüche, **dadurch gekennzeichnet, dass** der Bremsdruckhebel (3) ein Bremshebelelement (21) mit einem Stahlstift (13) und einer Kulisse (14) umfasst, wobei zum Einrasten und Ausrasten des Bremsdruckhebels der Stahlstift (13) in der Kulisse (14) läuft zum Fixieren in der jeweiligen Endposition.

4. Rollleine (1) nach einem der vorhergehenden Ansprüche, **dadurch gekennzeichnet, dass** der Bremsdruckhebel (3) bis zu einem Anschlag in Richtung der Leinenrolle (6) linear verschiebbar ist.

5. Rollleine (1) nach einem der vorhergehenden Ansprüche, **dadurch gekennzeichnet, dass** der Bremsdruckhebel (3) mit dem Gehäuse (7) über ein Gelenk (17) schwenkbar verbunden ist.

6. Rollleine (1) nach einem der vorhergehenden Ansprüche, **dadurch gekennzeichnet, dass** der Bremsdruckhebel (3) dem Haltegriff (15) benachbart angeordnet ist und zum Einstellen der Bremsposition aus der Ruheposition in Richtung Haltegriff (15) verschwenkt ist.

7. Rollleine (1) nach einem der vorhergehenden Ansprüche, **dadurch gekennzeichnet, dass** der Bremsdruckhebel (3) zum Einstellen der Rasterposition aus der Ruheposition in Richtung der Leinenrolle (2) verschoben ist.

8. Rollleine (1) nach einem der vorhergehenden Ansprüche, **dadurch gekennzeichnet, dass** zum Einstellen der Arretierposition der Bremsdruckhebel (3) aus der Ruheposition in Richtung Haltegriff (15) verschwenkt ist und in Richtung der Leinenrolle verschoben ist.

9. Rollleine (1) nach einem der vorhergehenden Ansprüche, **dadurch gekennzeichnet, dass** der Bremsdruckhebel (3) ein Oberteil (23) und ein Unterteil (24) aufweist, wobei das Oberteil (23) das Rastmittel (8), die Rastmittelfeder (4) und die Hebelfeder (5) umfasst, wobei das Unterteil (24) den Hebel (10) und die Kulisse (14) umfasst, und wobei ein Bedienungselement (16) am der Leinenrolle (2) entgegengesetzten Ende des Bremsdruckhebels (3) angeordnet ist und das Oberteil (23) und das Unterteil (24) verschliesst.

10. Rollleine (1) nach einem der vorhergehenden Ansprüche, **dadurch gekennzeichnet, dass** der Bremsdruckhebel (3) in der Arretierposition und/oder in der Rasterposition über den Stahlstift (13) und die Kulisse (14) in Eindrückrichtung der Leinenrolle (2) fixierbar und durch die Hebelfeder (5) durch erneutes Drücken wieder lösbar ist.

11. Rollleine (1) nach einem der vorhergehenden Ansprüche, **dadurch gekennzeichnet, dass** das Ende der Leine (2), welches an der Leinenrolle (6) befestigt ist, elastisch ist.

12. Verwendung der Rollleine (1) nach einem der vorhergehenden Ansprüche, zum Führen von Tieren.
